(19) Europäisches Patentamt
European Patent Office
Office européen des brevets

(11) EP 4 276 967 A1

(12) **EUROPEAN PATENT APPLICATION**
published in accordance with Art. 153(4) EPC

(43) Date of publication:
**15.11.2023 Bulletin 2023/46**

(21) Application number: **21917953.8**

(22) Date of filing: **29.12.2021**

(51) International Patent Classification (IPC):
***H01M 10/0567*** *(2010.01)* ***H01M 4/525*** *(2010.01)*
***H01M 10/0525*** *(2010.01)*

(52) Cooperative Patent Classification (CPC):
**H01M 4/525; H01M 10/0525; H01M 10/0567;**
Y02E 60/10

(86) International application number:
**PCT/KR2021/020170**

(87) International publication number:
**WO 2022/149792 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.01.2021 KR 20210001480**

(71) Applicant: **Samsung SDI Co., Ltd.**
**Yongin-si, Gyeonggi-do 17084 (KR)**

(72) Inventors:
- **JEONG, Myung Hwan**
  **Yongin-si, Gyeonggi-do 17084 (KR)**
- **KIM, Myung Hoon**
  **Yongin-si, Gyeonggi-do 17084 (KR)**
- **KIM, Sang Hoon**
  **Yongin-si, Gyeonggi-do 17084 (KR)**
- **KIM, Yun Hee**
  **Yongin-si, Gyeonggi-do 17084 (KR)**
- **PARK, In Jun**
  **Yongin-si, Gyeonggi-do 17084 (KR)**
- **PARK, Hong Ryeol**
  **Yongin-si, Gyeonggi-do 17084 (KR)**
- **SHIN, Jeong Min**
  **Yongin-si, Gyeonggi-do 17084 (KR)**
- **OH, Seung Ryong**
  **Yongin-si, Gyeonggi-do 17084 (KR)**
- **CHOI, Hyun Bong**
  **Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

(54) **ELECTROLYTE FOR LITHIUM SECONDARY BATTERY, AND LITHIUM SECONDARY BATTERY COMPRISING SAME**

(57) Provided are an electrolyte for a lithium secondary battery including a lithium salt, an organic solvent, and an additive, wherein the additive includes a first compound represented by Formula 1 and a second compound represented by Formula 2 below, and a mixing weight ratio of the first compound to the second compound is in a range of 1:9 to 9:1, and a lithium secondary battery including the same.

<Formula 1>

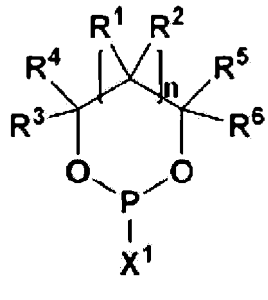

<Formula 2>

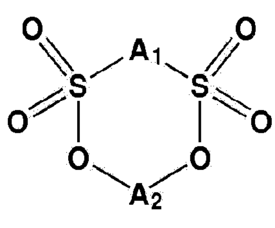

In Formula 1, $X^1$, $R^1$ to $R^6$, and n in Formula 1 and $A_1$ and $A_2$ in Formula 2 are as defined in the detailed description.

EP 4 276 967 A1

FIG. 1

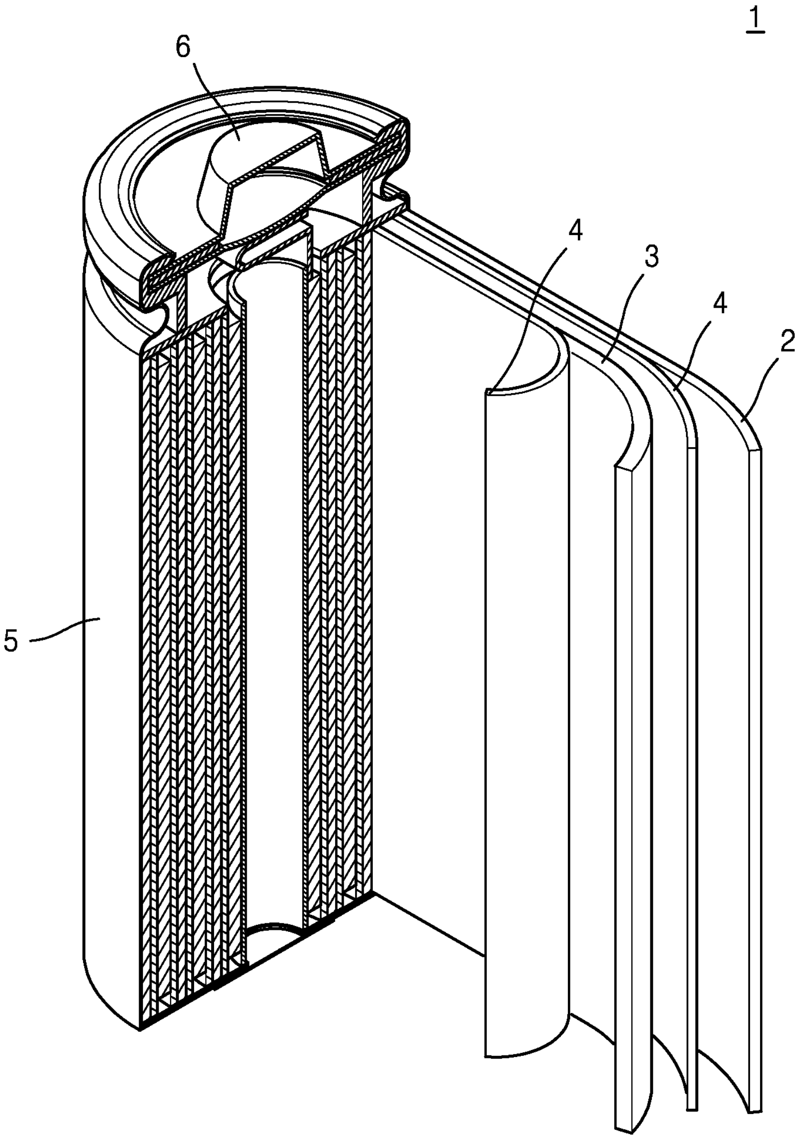

**Description**

TECHNICAL FIELD

The present disclosure relates to an electrolyte for a lithium secondary battery and a lithium secondary battery including the same.

BACKGROUND ART

Lithium secondary batteries are used as driving power sources for portable electronic devices such as video cameras, mobile phones, and laptop computers. Rechargeable lithium secondary batteries may have a high energy density per unit weight and may be charged at a high speed as compared with existing lead storage batteries, nickel-cadmium batteries, nickel-hydride batteries, and nickel-zinc batteries.

Since lithium secondary batteries operate at a high driving voltage, aqueous electrolytes having high reactivity with lithium may not be used. Organic electrolytes are generally used as electrolytes for lithium secondary batteries. Organic electrolytes are prepared by dissolving a lithium salt in an organic solvent. It is preferable that organic solvents are stable at high voltage and have high ionic conductivity, high permittivity, and low viscosity.

However, when organic electrolytes including a lithium salt are used as electrolytes for lithium secondary batteries, life characteristics and high-temperature stability of lithium secondary batteries may be degraded due to a side reaction between a negative electrode/positive electrode and the electrolyte.

Accordingly, there is a need for an electrolyte for a lithium secondary battery which is capable of providing a lithium secondary battery having improved life characteristics and high-temperature stability.

DESCRIPTION OF EMBODIMENTS

TECHNICAL PROBLEM

An aspect is to provide an electrolyte for a lithium secondary battery which is capable of improving battery performance.

Another aspect is to provide a lithium secondary battery including an electrolyte for a lithium secondary battery.

SOLUTION TO PROBLEM

According to an aspect, provided is an electrolyte for a lithium secondary battery including a lithium sale, an organic solvent, and an additive, wherein the additive includes a first compound represented by Formula 1 below and a second compound represented by Formula 2 below, and a mixing weight ratio of the first compound to the second compound is in a range of 1:9 to 9:1:

<Formula 1>

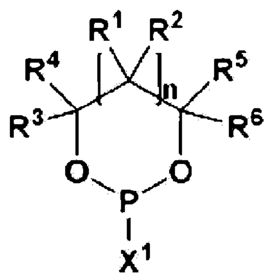

wherein, in Formula 1, $X^1$ is a fluoro group, a chloro group, a bromo group, or an iodo group, $R^1$ to $R^6$ are each independently hydrogen, a cyano group, a substituted or unsubstituted $C_1$ to $C_{20}$ alkyl group, a substituted or unsubstituted $C_1$ to $C_{20}$ alkoxy group, a substituted or unsubstituted $C_2$ to $C_{20}$ alkenyl group, a substituted or unsubstituted $C_2$ to $C_{20}$ alkynyl group, a substituted or unsubstituted $C_3$ to $C_{20}$ cycloalkyl group, a substituted or unsubstituted $C_6$ to $C_{20}$ aryl group, or a substituted or unsubstituted $C_2$ to $C_{20}$ heteroaryl group, and n is an integer of 0 or 1, and

<Formula 2>

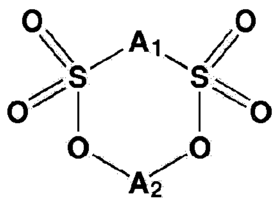

wherein, in Formula 2, $A_1$ and $A_2$ are each independently a substituted or unsubstituted $C_1$ to $C_5$ alkylene group, a carbonyl group, a sulfinyl group, or a divalent $C_2$ to $C_6$ group in which a plurality of substituted or unsubstituted alkylene units are bonded through ether bonds.

According to another aspect, provided is a lithium secondary battery including a positive electrode which includes a positive electrode active material, a negative electrode which includes a negative electrode active material, and the above-described electrolyte disposed between the positive electrode and the negative electrode.

ADVANTAGEOUS EFFECTS OF DISCLOSURE

When an electrolyte for a lithium secondary battery according to one embodiment is used, an increase in battery resistance during storage at a high temperature may be suppressed, and the life characteristics and high-temperature stability of a lithium secondary battery may be improved.

BRIEF DESCRIPTION OF DRAWINGS

FIG. 1 is a schematic diagram of a lithium secondary battery according to one embodiment.

FIG. 2 shows a result of measuring an elution amount of nickel (Ni) of a positive electrode after high-temperature storage of lithium secondary batteries according to Example 3 and Comparative Examples 1, 3, and 6.

BEST MODE

MODE OF DISCLOSURE

Hereinafter, an electrolyte for a lithium secondary battery and a lithium secondary battery including the same according to embodiments will be described in more detail.

An electrolyte for a lithium secondary battery according to one embodiment includes a lithium sale, an organic solvent, and an additive, wherein the additive includes a first compound represented by Formula 1 below and a second compound represented by Formula 2 below, and a mixing weight ratio of the first compound to the second compound is in a range of 1:9 to 9:1.

<Formula 1>

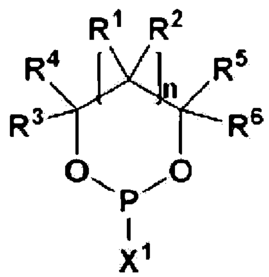

In Formula 1, $X^1$ is a fluoro group, a chloro group, a bromo group, or an iodo group, $R^1$ to $R^6$ are each independently hydrogen, a cyano group, a substituted or unsubstituted $C_1$ to $C_{20}$ alkyl group, a substituted or unsubstituted $C_1$ to $C_{20}$ alkoxy group, a substituted or unsubstituted $C_2$ to $C_{20}$ alkenyl group, a substituted or unsubstituted $C_2$ to $C_{20}$ alkynyl group, a substituted or unsubstituted $C_3$ to $C_{20}$ cycloalkyl group, a substituted or unsubstituted $C_6$ to $C_{20}$ aryl group, or a substituted or unsubstituted $C_2$ to $C_{20}$ heteroaryl group, and n is an integer of 0 or 1.

<Formula 2>

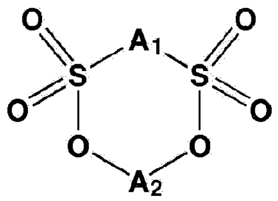

In Formula 2, $A^1$ and $A^2$ are each independently a substituted or unsubstituted $C_1$ to $C_5$ alkylene group, a carbonyl group, a sulfinyl group, or a divalent $C_2$ to $C_6$ group in which a plurality of substituted or unsubstituted alkylene units are bonded through ether bonds.

When lithium transition metal oxide, which includes nickel and at least one transition metal and in which a content of nickel is, for example, 80 mol% or more with respect to the total number of moles of the transition metal, is used as a positive electrode active material, it is possible to manufacture a lithium secondary battery having high power and high capacity. However, since lithium transition metal oxide having a high nickel content has an unstable surface structure, during a charging/discharging process of a battery, gas generation due to side reactions increases, and elution of a transition metal such as nickel increases. Accordingly, in a lithium secondary battery using lithium transition metal oxide having a high nickel content as a positive electrode active material, life characteristics may be degraded, and resistance at a high temperature may be increased. Thus, it is necessary to improve stability at a high temperature.

In the electrolyte for a lithium secondary battery according to one embodiment, since a combination of the first compound represented by Formula 1 and the second compound represented by Formula 2 is used as an additive, a solid electrolyte interface (SEI) film and/or a protective layer with low resistance may be formed, thereby reducing internal resistance of a battery. In addition, an elution amount of nickel is considerably reduced during high-temperature storage to solve such limitations and to obtain an excellent resistance suppression effect at a high temperature, thereby manufacturing a lithium secondary battery having an improved lifetime and high-temperature stability.

A reason for improving the performance of a lithium secondary battery using the combination of the first compound represented by Formula 1 and the second compound represented by Formula 2 as the additive of the electrolyte will be described in more detail below, but this is to help an understanding of the present disclosure, and the scope of the present disclosure is not limited to the following description.

Although $LiPF_6$ is generally used as a lithium salt included in an electrolyte, $LiPF_6$ has insufficient thermal stability and is easily hydrolyzed even by moisture. As such, an $LiPF_6$-containing electrolyte exhibit instability when exposed to moisture and a high temperature. A decomposition product of $LiPF_6$ is one of the main factors that contribute to changes in a composition and stability of an interface of a negative electrode. Residual moisture and/or surface hydroxyl groups may react with $PF_6$ anions in a solution to generate HF and release $PF_5$. HF released as described above corrodes a positive electrode and, in some cases, corrodes the positive electrode to gradually degrade electrochemical performance.

When the first compound represented by Formula 1 is used as the additive of the electrolyte, an SEI film having high-temperature stability and excellent ionic conductivity may be formed on a surface of a negative electrode and a side reaction of $LiPF_6$ due to a $-PO_2F$ functional group may be suppressed. As a result, during storage at a high temperature, gas generation due to a decomposition reaction of an electrolyte inside a lithium secondary battery is suppressed, and thus cycle life characteristics are improved. In addition, gas generation may be suppressed to prevent a swelling phenomenon of a battery.

In addition, the second compound represented by Formula 2 is included together with the compound represented by Formula 1, an SEI film and/or protective layer having low resistance may be formed, and thus battery internal resistance may be reduced.

The first compound represented by Formula 1 and the second compound represented by Formula 2 strongly interact with transition metal ions of a positive electrode to completely cap and deactivate a reaction center on a surface of the positive electrode, thereby preventing dissolution of a transition metal and oxidation of a solvent. That is, a cathode electrolyte interphase (CEI) film having low impedance characteristics is formed on the surface of the positive electrode. The CEI film prevents oxidation of an electrolyte to prevent the formation of by-products such as gas and HF and prevents a structure of an electrode from being destroyed, thereby improving cycle stability and rate capability. In addition, since the CEI film is formed, resistance at an interface between the electrolyte and the positive electrode is lowered to improve lithium ion conductivity, thereby obtaining an effect of increasing a low-temperature discharge voltage.

More specifically, the first compound represented by Formula 1 may form composites by being coordinated with thermal decomposition products of a lithium salt such as $LiPF_6$ or anions dissociated from the lithium salt, and due to the formation of the composites, the thermal decomposition products of the lithium salt or the anions dissociated from

the lithium salt may be stabilized to suppress undesired side reactions between the electrolyte and the thermal decomposition products and anions, thereby improving cycle life characteristics of a lithium secondary battery and also preventing the generation of gas inside the lithium secondary battery to considerably reduce a rate of defect occurrence.

In addition, the second compound represented by Formula 2 has a higher reduction potential than the first compound represented by Formula 1 and thus participates in the formation of a SEI film first, thereby preventing overdecomposition of the first compound represented by Formula 1. Accordingly, a side reaction with the electrolyte is suppressed, thereby forming the SEI film and/or protective layer having low resistance. The first compound of Formula 1, of which overdecomposition is suppressed by the second compound of Formula 2, may suppress high-temperature thermal decomposition of the lithium salt at a high temperature, for example, 60 °C, to reduce a side reaction of the electrolyte.

A mixing weight ratio of the compound represented by Formula 1 to the second compound represented by Formula 2 may be in a range of 1:9 to 9:1. For example, the mixing weight ratio of the compound represented by Formula 1 to the second compound represented by Formula 2 may be in a range of 1:8 to 8:1, specifically, for example, in a range of 1:7 to 7:1, in a range of 1:6 to 6:1, and for example, in a range of about 1:5 to about 5:1. The first compound and the second compound are included in the above mixing weight ratio to form an SEI film having low resistance and excellent thermal stability, thereby suppressing a decomposition reaction of the electrolyte.

With respect to the total weight of the electrolyte, a content of the first compound represented by Formula 1 may be in a range of 0.05 wt% to 10 wt%, for example, in a range of 0.1 wt% to 10 wt%, in a range of 0.2 wt% to 5 wt%, or in a range of 0.2 wt% to 3 wt% t, but the present disclosure is not limited thereto. As needed, the first compound may be selectively used in an appropriate amount in a range that does not impair battery characteristics. When the content of the first compound represented by Formula 1 is within the above range, high-temperature storage and swelling improvement effects are obtained, and an increase in interface resistance is suppressed, thereby manufacturing a lithium secondary battery having improved high-temperature characteristics and resistance characteristics without the degradation in life characteristics thereof.

With respect to the total weight of the electrolyte, a content of the second compound represented by Formula 2 may be in a range of 0.05 wt% to 10 wt%, for example, in a range of 0.1 wt% to 10 wt%, in a range of 0.2 wt% to 5 wt%, or in a range of 0.2 wt% to 3 wt%, but the present disclosure is not limited thereto. As needed, the second compound may be selectively used in an appropriate amount in a range that does not impair battery characteristics. When the content of the second compound represented by Formula 2 is within the above range, an increase in interfacial resistance is suppressed to secure capacity and increase a lifetime, thereby improving battery performance.

According to one embodiment, the content of the first compound represented by Formula 1 may be greater than or equal to the content of the second compound represented by Formula 2. As described above, since the content of the first compound is greater than or equal to the content of the second compound, during high-temperature storage, a rate of increase in direct current internal resistance direct current (DCIR) may be further suppressed, and also a generation amount of gas may be reduced.

According to one embodiment, the first compound may be a compound represented by Formula 1-1 below.

<Formula 1-1>

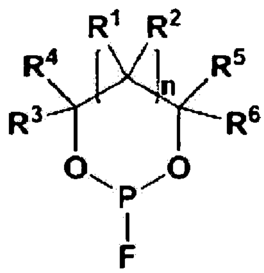

In Formula 1-1, $R^1$ to $R^6$ and n are as described above.

The compound represented by Formula 1-1 has an electron-accepting fluorine substituent directly bonded to phosphorus (P(III)) that is a central atom, thereby improving the stability of an SEI film present on a positive electrode.

According to one embodiment, the first compound may be represented by Formula 1-1A or 1-1B below.

<Formula 1-1A> <Formula 1-1B>

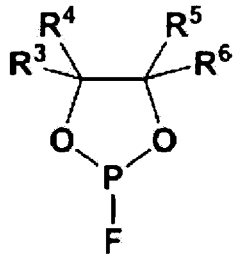
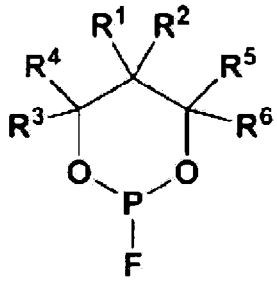

In Formulas 1-1A and 1-1B, $R^1$ to $R^6$ are each independently hydrogen, a substituted or unsubstituted $C_1$ to $C_{10}$ alkyl group, a substituted or unsubstituted $C_1$ to $C_{10}$ alkoxy group, a substituted or unsubstituted $C_2$ to $C_{10}$ alkenyl group, or a substituted or unsubstituted $C_2$ to $C_{10}$ alkynyl group.

Specifically, $R^1$ to $R^6$ may each independently be hydrogen or a substituted or unsubstituted $C_1$ to $C_{10}$ alkyl group, and more specifically, $R^1$ to $R^6$ may each be hydrogen.

The first compound represented by Formula 1 is, for example, at least one selected from compounds represented by Formulas 1-2 to 1-9 below.

<Formula 1-2> <Formula 1-3> <Formula 1-4> <Formula 1-5>

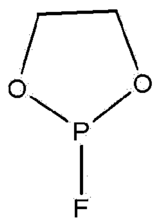
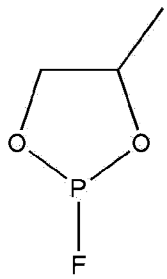
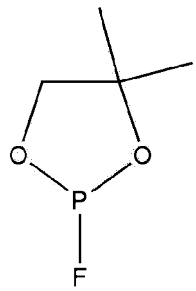
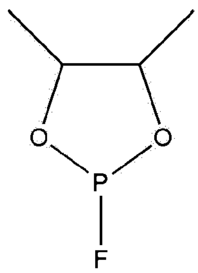

<Formula 1-6> <Formula 1-7> <Formula 1-8> <Formula 1-9>

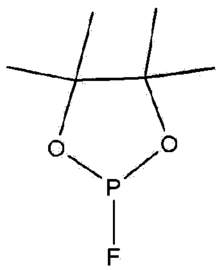
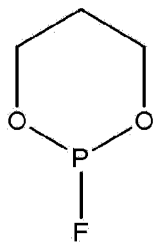
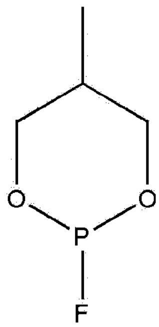
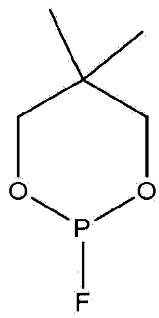

According to one embodiment, the first compound may be a compound represented by Formula 1-2 above.

According to one embodiment, the second compound may be represented by Formula 2-1 below.

<Formula 2-1>

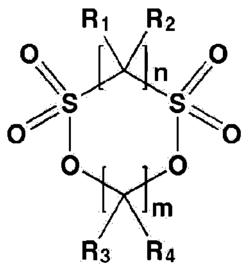

In Formula 2-1, $R^1$ to $R^4$ are each independently hydrogen, a cyano group, a substituted or unsubstituted $C_1$ to $C_{20}$ alkyl group, a substituted or unsubstituted $C_1$ to $C_{20}$ alkoxy group, a substituted or unsubstituted $C_2$ to $C_{20}$ alkenyl group, a substituted or unsubstituted $C_2$ to $C_{20}$ alkynyl group, a substituted or unsubstituted $C_3$ to $C_{20}$ cycloalkyl group, a substituted or unsubstituted $C_6$ to $C_{20}$ aryl group, or a substituted or unsubstituted $C_2$ to $C_{20}$ heteroaryl group,

n is an integer of 0 or 1, and
m is an integer from 1 to 5.

The second compound represented by Formula 2 is, for example, at least one selected from compounds represented by Chemical Formulas 2-2 to 2-19.

<Formula 2-2> <Formula 2-3> <Formula 2-4> <Formula 2-5>

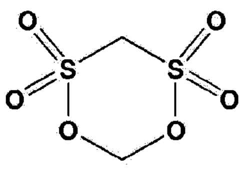
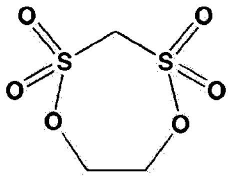
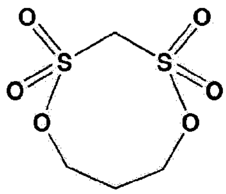
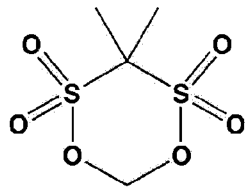

<Formula 2-6> <Formula 2-7> <Formula 2-8> <Formula 2-9>

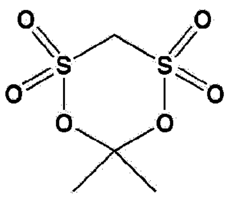
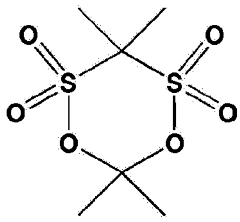
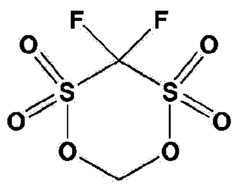
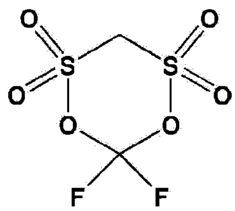

<Formula 2-10> <Formula 2-11> <Formula 2-12> <Formula 2-13>

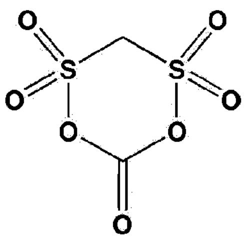
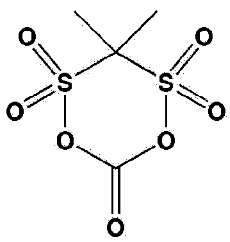
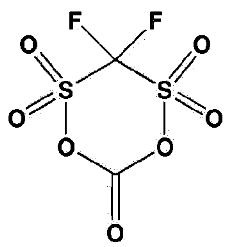
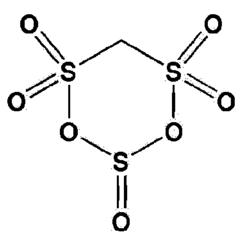

<Formula 2-14> <Formula 2-15> <Formula 2-16>

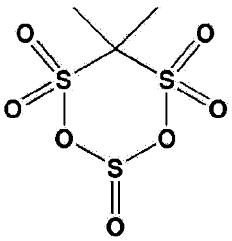
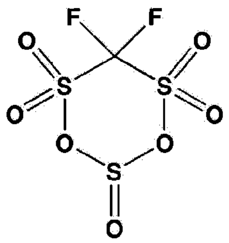
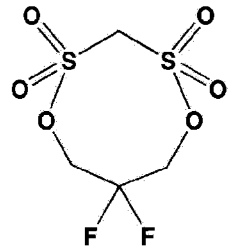

<Formula 2-17> <Formula 2-18> <Formula 2-19>

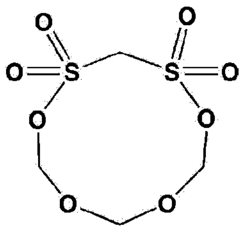
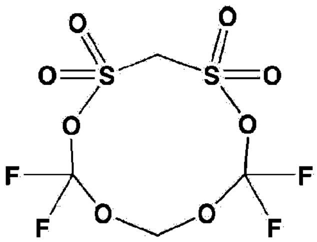
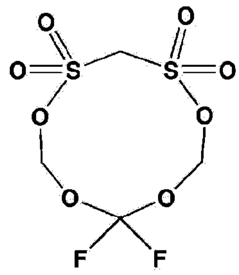

According to one embodiment, the second compound may be a compound represented by Formula 2-2 below.

According to one embodiment, the lithium salt may include at least one selected from $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein $2 \leq x \leq 20$ and $2 \leq y \leq 20$), LiCl, LiI, lithium bis(fluorosulfonyl)imide (LiFSI), lithium bis(oxalato)borate (LiBOB), $LiPO_2F_2$, and compounds represented by Formulas 3 to 6, but the present disclosure is not limited thereto. Any material usable as a lithium salt in the art may be used.

<Formula 3> <Formula 4>

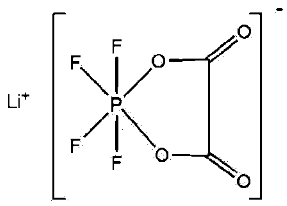
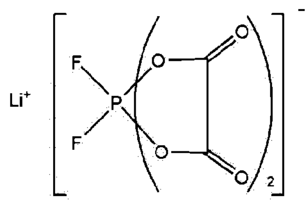

<Formula 5> <Formula 6>

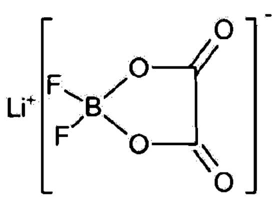
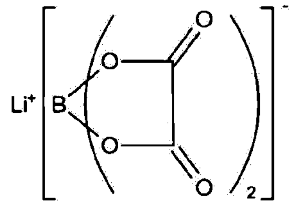

A concentration of the lithium salt in the electrolyte is in a range of 0.01 M to 5.0 M, in a range of, for example, 0.05 M to 5.0 M, in a range of, for example, 0.1 M to 5.0 M, or in a range of, for example, 0.1 M to 2.0 M. When the concentration of the lithium salt is within the above range, further improved characteristics of a lithium secondary battery may be obtained.

The organic solvent may be at least one selected from a carbonate-based solvent, an ester-based solvent, an ether-based solvent, and a ketone-based solvent.

The carbonate-based solvent may include ethyl methyl carbonate (EMC), methyl propyl carbonate (MPC), ethyl

propyl carbonate (EPC), dimethyl carbonate (DMC), diethyl carbonate (DEC), dipropyl carbonate (DPC), propylene carbonate (PC), ethylene carbonate (EC), fluoroethylene carbonate (FEC), vinylene carbonate (VC), vinyl ethylene carbonate (VEC), butylene carbonate (BC), or the like. The ester solvent may include methyl propionate, ethyl propionate, propyl propionate, ethyl butyrate, methyl acetate, ethyl acetate, n-propyl acetate, dimethyl acetate, gamma butyrolactone, decanolide, gamma valerolactone, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone or the like. The nitrile-based solvent may include acetonitrile (AN), succinonitrile (SN), adiponitrile, or the like. As other solvents, dimethyl sulfoxide, dimethylformamide, dimethylacetamide, tetrahydrofuran, or the like may be used, but the present disclosure is not necessarily limited thereto. Any material usable as an organic solvent in the art may be used. For example, the organic solvent may include a mixed solvent of 50 vol% to 95 vol% of chain carbonate and 5 vol% to 50 vol% of cyclic carbonate, for example, a mixed solvent of 70 vol% to 95 vol% of chain carbonate and 5 vol% to 30 vol% of cyclic carbonate. For example, the organic solvent may include a mixed solvent of three or more organic solvents.

According to one embodiment, the organic solvent may include at least one selected from EMC, MPC, EPC, DMC, DEC, DPC, PC, EC, FEC, VC, VEC, BC, ethyl propionate, propyl propionate, ethyl butyrate, dimethylsulfoxide, dimethylformamide, dimethylacetamide, gamma-valerolactone, gamma-butyrolactone, and tetrahydrofuran, but the present disclosure is not limited thereto. Any material usable as an organic solvent in the art may be used.

The electrolyte may be in a liquid or gel state. The electrolyte may be prepared by adding a lithium salt and the above-described additive to an organic solvent.

A lithium secondary battery according to another embodiment includes a positive electrode including a positive electrode active material, a negative electrode including a negative electrode active material, and the above-described electrolyte disposed between the positive electrode and the negative electrode.

Since the lithium secondary battery includes the above-described additive of the electrode for a lithium secondary battery, an increase in initial resistance of the lithium secondary battery is suppressed, gas generation due to a side reaction is suppressed, and life characteristics are improved.

The positive electrode active material includes lithium transition metal oxide including nickel and at least one selected from other transition metals. In the lithium transition metal oxide including nickel and at least one selected from other transition metals, a content of nickel may be 60 mol% or more, for example, 75 mol% or more, for example, 80 mol% or more, for example, 85 mol% or more, or for example, 90 mol% or more, with respect to the total number of moles of a transition metal.

For example, the lithium transition metal oxide may be a compound represented by Formula 7 below.

<Formula 7> $Li_aNi_xCo_yM_zO_{2-b}A_b$

In Formula 7, $1.0 \le a \le 1.2$, $0 \le b \le 0.2$, $0.6 \le x < 1$, $0 < y \le 0.3$, $0 < z \le 0.3$, $x+y+z=1$, M is at least one selected from manganese (Mn), vanadium (V), magnesium (Mg), gallium (Ga), silicon (Si), tungsten (W), molybdenum (Mo), iron (Fe), chromium (Cr), copper (Cu) ), zinc (Zn), titanium (Ti), aluminum (Al), and boron (B), and A is F, S, Cl, Br, or a combination thereof. For example, $0.7 \le x < 1$; $0 < y \le 0.3$, $0 < z \le 0.3$; $0.8 \le x < 1$, $0 < y \le 0.3$, $0 < z \le 0.3$; $0.8 \le x < 1$, $0 < y \le 0.2$, $0 < z \le 0.2$; $0.83 \le x < 0.97$, $0 < y \le 0.15$, and $0 < z \le 0.15$. Alternatively, $0.85 \le x < 0.95$, $0 < y \le 0.1$, and $0 < z \le 0.1$.

For example, the lithium transition metal oxide may be at least one selected from compounds represented by Formulas 4 and 5 below.

<Formula 4> $LiNi_xCo_yMn_zO_2$

In Formula 4, $0.6 \le x \le 0.95$, $0 < y \le 0.2$, and $0 < z \le 0.1$. For example, $0.7 \le x \le 0.95$, $0 < y \le 0.3$, and $0 < z \le 0.3$.

<Formula 5> $LiNi_xCo_yAl_zO_2$

In Formula 5, $0.6 \le x \le 0.95$, $0 < y \le 0.2$, and $0 < z \le 0.1$. For example, $0.7 \le x \le 0.95$, $0 < y \le 0.3$, and $0 < z \le 0.3$. For example, $0.8 \le x \le 0.95$, $0 < y \le 0.3$, and $0 < z \le 0.3$. For example, $0.82 \le x \le 0.95$, $0 < y \le 0.15$, and $0 < z \le 0.15$. For example, $0.85 \le x \le 0.95$, $0 < y \le 0.1$, and $0 < z \le 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, or $LiNi_{0.88}Co_{0.1}Al_{0.02}O_2$.

According to another embodiment, the positive electrode active material may include at least one selected from Li-Ni-Co-Al (NCA), Li-Ni-Co-Mn (NCM), lithium cobalt oxide ($LiCoO_2$), lithium manganese oxide ($LiMnO_2$), lithium nickel oxide ($LiNiO_2$), and lithium iron phosphate ($LiFePO_4$).

The negative electrode active material may include at least one selected from a silicon-based compound, a

carbon-based material, a composite of a silicon-based compound and a carbon-based compound, and silicon oxide ($SiO_x$) (wherein 0<x<2). The silicon-based compound may include silicon particles, silicon alloy particles, or the like.

A size of the silicon-based compound is less than 200 nm, for example, in a range of 10 nm to 150 nm. The term "size" may refer to an average particle diameter when a silicon-based compound is spherical and may refer to an average major axis length when silicon particles are non-spherical.

When the size of the silicon-based compound is within the above range, life characteristics are excellent, and thus, when the electrolyte according to one embodiment is used, a lifetime of the lithium secondary battery is further improved.

The carbon-based material may be crystalline carbon, amorphous carbon, or a mixture thereof. The crystalline carbon may be graphite such as non-shaped, plate-shaped, flake-shaped, spherical, or fibrous natural graphite or artificial graphite. The amorphous carbon may be soft carbon (low-temperature fired carbon) or hard carbon, mesophase pitch carbide, fired coke, or the like.

The composite of the silicon-based compound and the carbon-based compound may be a composite having a structure in which silicon nanoparticles are disposed on a carbon-based compound, a composite in which silicon particles are included on a surface of a carbon-based compound and inside the carbon-based compound, or a composite in which silicon particles are coated with a carbon-based compound and included inside the carbon-based compound. In the composite of the silicon-based compound and the carbon-based compound, the carbon-based compound may be graphite, graphene, graphene oxide, or a combination thereof.

The composite of the silicon-based compound and the carbon-based compound may be an active material obtained by dispersing silicon nanoparticles having an average particle diameter of about 200 nm or less on carbon-based compound particles and then coating the silicon nanoparticles with carbon, or an active material in which silicon (Si) particles are present on and inside graphite, or the like. An average particle diameter of secondary particles of the composite of the silicon-based compound and the carbon-based compound may be in a range of 5 um to 20 um. An average particle diameter of silicon nanoparticles may be 5 nm or more, for example, 10 nm or more, for example, 20 nm or more, for example, 50 nm or more, or for example, 70 nm or more. The average particle diameter of the silicon nanoparticles may be 200 nm or less, 150 nm or less, 100 nm or less, 50 nm or less, 20 nm or less, or 10 nm or less. For example, the average particle diameter of the silicon nanoparticles may be in a range of 100 nm to 150 nm.

The average particle diameter of the secondary particles of the composite of the silicon-based compound and the carbon-based compound may be in a range of 5 um to 18 um, in a range of, for example, 7 um to 15 um, or in a range of, for example. 10 um to 13 um.

As another example of the composite of the silicon-based compound and the carbon-based compound, a porous silicon composite cluster structure disclosed in Korean Patent Publication No. 10-2018-0031585 and a porous silicon composite cluster structure disclosed in Korean Patent Publication No. 10-2018-0056395 may be used. Korean Patent Publication No. 10-2018-0031586 and Korean Patent Publication No. 10-2018-0056395 are incorporated herein by reference.

A silicon-carbon-based compound composite according to one embodiment may be a porous silicon composite cluster that is a porous silicon composite cluster including a porous core which includes porous silicon composite secondary particles, and a shell which includes second graphene disposed on the porous core, wherein the porous silicon composite secondary particles include an aggregate of two or more silicon composite primary particles, and the silicon composite primary particles include silicon, silicon oxide ($SiO_x$) (wherein O<x<2) disposed on the silicon, and first graphene disposed on the silicon oxide.

A silicon-carbon-based compound composite according to another embodiment may be a porous silicon composite cluster structure. The porous silicon composite cluster structure includes a porous silicon composite cluster including porous silicon composite secondary particles, and a second carbon flake on at least one surface of the porous silicon composite secondary particles, and a carbon-based coating film including amorphous carbon disposed on the porous silicon composite cluster, wherein the porous silicon composite secondary particles include an aggregate of two or more silicon composite primary particles, the silicon composite primary particles include silicon, silicon oxide ($SiO_x$) (wherein O<x<2) on at least one surface of the silicon, and a first carbon flake on at least one surface of the silicon oxide, and the silicon oxide is present in a state of a film, a matrix, or a combination thereof,

The first carbon flake and the second carbon flake may each be present in a form of a film, particles, a matrix, or a combination thereof. Each of the first carbon flake and the second carbon flake may be graphene, graphite, carbon fiber, graphene oxide, or the like.

The above-described composite of the silicon-based compound and the carbon-based compound is a composite having a structure in which silicon nanoparticles are disposed on a carbon-based compound, a composite in which silicon particles are included on a surface of a carbon-based compound and inside the carbon-based compound, or a composite in which silicon particles are coated with a carbon-based compound and included inside the carbon-based compound. In the composite of the silicon-based compound and the carbon-based compound, the carbon-based compound may be graphite, graphene, graphene oxide, or a combination thereof.

A shape of the lithium secondary battery is not particularly limited, and the lithium secondary battery includes a lithium ion battery, a lithium ion polymer battery, a lithium sulfur battery, and the like.
The lithium secondary battery may be manufactured through the following method.
First, a positive electrode is prepared.
For example, a positive electrode active material composition, in which a positive electrode active material, a conductive material, a binder, and a solvent are mixed, is prepared. The positive electrode active material composition is applied directly on a metal current collector to prepare a positive electrode plate. Alternatively, the positive electrode active material composition may be cast on a separate support, and then a film peeled off of from the support may be laminated on a metal current collector to prepare the positive electrode plate. The positive electrode is not limited to the forms listed above and may have forms other than the above forms.
As the positive electrode active material, any material, which is commonly used as a lithium-containing metal oxide in the art, may be used without limitation. For example, at least one composite oxide of lithium and a metal selected from cobalt, manganese, nickel, and a combination thereof may be used. A specific example of the positive electrode active material may include a compound represented by any one of $Li_aA_{1-b}B^1_bD^1_2$ (wherein $0.90 \le a \le 1.8$ and $0 \le b \le 0.5$), $Li_aE_{1-b}B^1_bO_{2-c}D^1_c$ (wherein $0.90 \le a \le 1.8$, $0 \le b \le 0.5$, and $0 \le c \le 0.05$); $LiE_{2-b}B^1_bO_{4-c}D^1_c$ (wherein $0 \le b \le 0.5$ and $0 \le c \le 0.05$); $Li_aNi_{1-b-c}Co_bB^1_cD^1_\alpha$ (wherein $0.90 \le a \le 1.8$, $0 \le b \le 0.5$, $0 \le c \le 0.05$, and $0 < \alpha \le 2$), $Li_aNi_{1-b-c}Co_bB^1_cO_{2-\alpha}F^1_\alpha$ (wherein $0.90 \le a \le 1.8$, $0 \le b \le 0.5$, $0 \le c \le 0.05$, and $0 < \alpha < 2$), $Li_aNi_{1-b-c}Co_b1^1_cO_{2-\alpha}F^1_2$ (wherein $0.90 \le a \le 1.8$, $0 \le b \le 0.5$, $0 \le c \le 0.05$, and $0 < \alpha < 2$), $Li_aNi_{1-b-c}Mn_bB^1_cD_\alpha$ (wherein $0.90 \le a \le 1.8$, $0 \le b \le 0.5$, $0 \le c \le 0.05$, and $0 < \alpha \le 2$), $Li_aNi_{1-b-c}Mn_bB^1_cO_{2-\alpha}F^1_\alpha$(wherein $0.90 \le a \le 1.8$, $0 \le b \le 0.5$, $0 \le c \le 0.05$, and $0 < \alpha < 2$), $Li_aNi_{1-b-c}Mn_bB^1_cO_{2-\alpha}F^1_2$(wherein $0.90 \le a \le 1.8$, $0 \le b \le 0.5$, $0 \le c \le 0.05$, and $0 < \alpha < 2$), $Li_aNi_bE_cG_dO_2$ (wherein $0.90 \le a \le 1.8$, $0 \le b \le 0.9$, $0 \le c \le 0.5$, and $0.001 \le d \le 0.1$),$Li_aNi_bCo_cMn_dGeO_2$ (wherein $0.90 \le a \le 1.8$, $0 \le b \le 0.9$, $0 \le c \le 0.5$, $0 \le d \le 0.5$, and $0.001 \le e \le 0.1$),$Li_aNiG_bO_2$ (wherein $0.90 \le a \le 1.8$ and $0.001 \le b \le 0.1$),$Li_aCoG_bO_2$ (wherein $0.90 \le a \le 1.8$ and $0.001 \le b \le 0.1$),$Li_aMnG_bO_2$ (wherein $0.90 \le a \le 1.8$ and $0.001 \le b \le 0.1$),$Li_aMn_2G_bO_4$ (wherein $0.90 \le a \le 1.8$ and $0.001 \le b \le 0.1$),$QO_2$, $QS_2$, $LiQS_2$, $V_2O_5$, $LiV_2O_5$, $LiIO_2$, $LiNiVO_4$, $Li_{(3-f)}J_2(PO_4)_3$($0 \le f \le 2$), $Li_{(3-f)}Fe_2(PO_4)_3$ (wherein $0 \le f \le 2$), and $LiFePO_4$.
In the formulas above, A may be Ni, Co, Mn, or a combination thereof, $B^1$ may be Al, Ni, Co, Mn, Cr, Fe, Mg, Sr, V, a rare earth element, or a combination thereof, $D^1$ may be O, F, S, P, or a combination thereof, E may be Co, Mn, or a combination thereof, $F^1$ may be F, S, P, or a combination thereof, G may be Al, Cr, Mn, Fe, Mg, La, Ce, Sr, V, or a combination thereof, Q may be Ti, Mo, Mn, or a combination thereof, I may be Cr, V, Fe, Sc, Y, or a combination thereof, and J may be V, Cr, Mn, Co, Ni, Cu, or a combination thereof.
For example, $LiCoO_2$, $LiMn_xO_{2x}$ (wherein x=1 or 2), $LiNi_{1-x}Mn_xO_{2x}$ ($0<x<1$), $LiNi_{1-x-y}Co_xMn_yO_2$ (wherein $0 \le x \le 0.5$ or $0 \le y \le 0.5$), $LiFePO_4$, or the like may be used.
Of course, a compound having a coating layer on a surface of the compound may be used, or a mixture of the compound and a compound having a coating layer may be used. The coating layer may include a coating element compound of an oxide or hydroxide of a coating element, an oxyhydroxide of the coating element, an oxycarbonate of the coating element, or a hydroxycarbonate of the coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. In a process of forming the coating layer, any coating method may be used as long as the compound may be coated with such elements through a method (for example, a spray coating method or a dipping method) that does not adversely affect physical properties of the positive electrode active material. Since the coating method is known well to those who work in the related field, a detailed description thereof will be omitted.
The conductive material may include carbon black, graphite fine particles, or the like, but the present disclosure is not limited thereto. Any material usable as a conductive material in the art may be used.
The binder may include at least one selected from vinylidene a fluoride/hexafluoropropylene copolymer, polyvinylidene fluoride (PVDF), polyacrylonitrile, polymethyl methacrylate, polytetrafluoroethylene, a mixture thereof, or a styrene butadiene rubber-based polymer, but the present disclosure is not limited thereto. Any material usable as a binder in the art may be used.
The solvent may include N-methylpyrrolidone, acetone, or water, but the present disclosure is not limited thereto. Any solvent usable in the art may be used.
Contents of the positive electrode active material, the conductive material, the binder, and the solvent are at levels that are commonly used in a lithium battery. One or more of the conductive material, the binder, and the solvent may be omitted according to the use and configuration of a lithium battery.
Next, a negative electrode is prepared.
For example, a negative electrode active material composition is prepared by mixing a negative electrode active material, a conductive material, a binder, and a solvent. The negative electrode active material composition is applied directly on a metal current collector and dried to prepare a negative electrode plate. Alternatively, the negative electrode active material composition may be cast on a separate support, and then a film peeled off from the support may be laminated on a metal current collector to prepare the negative electrode plate.
As the negative electrode active material, any material, which is usable as a negative electrode active material

for a lithium battery in the art, may be used. For example, the negative electrode active material may include at least one selected from a lithium metal, a metal capable of forming an ally with lithium, a transition metal oxide, a non-transition metal oxide, and a carbon-based material.

For example, the metal capable of forming an ally with lithium may be Si, Sn, Al, Ge, Pb, Bi, Sb, a Si-Y alloy (wherein Y is an alkali metal, an alkaline earth metal, a Group 13 element, a Group 14 element, a transition metal, a rare earth element, or a combination thereof and is not Si) or a Sn-Y alloy (wherein Y is an alkali metal, an alkaline earth metal, a Group 13 element, a Group 14 element, a transition metal, a rare earth element, or a combination thereof and is not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxide may be lithium titanium oxide, vanadium oxide, or lithium vanadium oxide.

For example, a non-transition metal oxide is $SnO_2$, $SiO_x$ (wherein $0<x<2$), or the like.

The carbon-based material may be crystalline carbon, amorphous carbon, or a mixture thereof. The crystalline carbon may be graphite such as non-shaped, plate-shaped, flake-shaped, spherical, or fibrous natural graphite or artificial graphite. The amorphous carbon may be soft carbon (low-temperature fired carbon) or hard carbon, mesophase pitch carbide, fired coke, or the like.

The conductive material and the binder in the negative electrode active material composition may be the same as those in the above-described positive electrode active material composition.

Contents of the negative electrode active material, the conductive material, the binder, and the solvent are at levels that are commonly used in a lithium battery. One or more of the conductive material, the binder, and the solvent may be omitted according to the use and configuration of a lithium battery.

Next, a separator to be inserted between the positive electrode and the negative electrode is prepared.

As the separator, any separator commonly used in a lithium battery may be used. A separator having low resistance to the movement of ions in an electrolyte and an excellent electrolyte impregnation ability may be used. For example, the separator may include at least one selected from a glass fiber, polyester, Teflon, polyethylene, polypropylene, polytetrafluoroethylene (PTFE), and a combination thereof and may be in the form of a nonwoven fabric or a woven fabric. For example, a windable separator including polyethylene, polypropylene, or the like may be used in a lithium ion battery, and a separator having an excellent electrolyte impregnation ability may be used in a lithium ion polymer battery. For example, the separator may be prepared according to the following method.

A polymer resin, a filler, and a solvent are mixed to prepare a separator composition. The separator composition may be applied directly on an electrode and dried to form the separator. Alternatively, the separator composition may be cast on a support, and then a separator film peeled off of the support may be laminated on an electrode to form the separator.

The polymer resin used for preparing the separator is not particularly limited, and any material used in a binding material of an electrode plate may be used. For example, the polymer resin may include a vinylidene fluoride/hexafluoropropylene copolymer, PVDF, polyacrylonitrile, polymethyl methacrylate, or a mixture thereof.

In addition, the present disclosure is not limited thereto, and for example, the separator may include a polyethylene separator (PES), a polypropylene separator (PPS), a ceramic coated separator (CCS), a polymer coated separator (OCS), a multi-layer coated separator (MCS), a multi-functional separator (MFS), or the like and may also include a combination thereof.

Next, the above-described electrolyte is prepared.

As shown in FIG. 1, a lithium battery 1 includes a positive electrode 3, a negative electrode 2, and a separator 4. The positive electrode 3, the negative electrode 2, and the separator 4 are wound or folded to be accommodated in a battery case 5. Subsequently, an electrolyte is injected into the battery case 5, and the battery case 5 is sealed with a cap assembly 6 to complete the lithium battery 1. The battery case may have a cylindrical shape, a prismatic shape, a thin film shape, or the like. For example, the lithium battery may be a large-sized thin film battery. The lithium battery may be a lithium ion battery.

In a cylindrical battery, an electrode assembly, which has a cylindrical shape in which a separator is wound between a positive electrode and a negative electrode, may be formed and inserted into a cylindrical can, and then an electrolyte may be injected into the cylindrical can. The cylindrical can may be made of steel, a steel alloy, nickel-plated steel, a nickel-plated steel alloy, aluminum, an aluminum alloy, or an equivalent thereof, but a material thereof is not limited thereto. In addition, in the cylindrical can, in order to prevent a cap assembly from being separated to the outside, with respect to the cap assembly, a beading part may be formed to be recessed inward below the cap assembly, and a crimping part may be formed to bent inward on the cap assembly.

Meanwhile, a plurality of battery structures in which the separator is disposed between the positive electrode and the negative electrode may be stacked to form a battery pack, and such a battery pack may be used in all devices requiring high capacity and high power. For example, the battery pack may be used in a laptop computer, a smartphone, an electric vehicle, and the like.

In a lithium secondary battery according to one embodiment, an increase in DCIR may be considerably reduced as compared with a lithium secondary battery adopting general nickel-rich lithium-nickel composite oxide as a positive electrode active material, thereby exhibiting excellent battery characteristics.

An operating voltage of a lithium secondary battery to which the positive electrode, the negative electrode, and the electrolyte are applied has, for example, a lower limit of 2.5 V to 2.8 V and an upper limit of 4.1 V or more, and is, for example, in a range of 4.1 V to 4.45 V.

In addition, the lithium secondary battery may be used in, for example, a power tool that moves by receiving power from an electric motor, an electric motor vehicle such as an electric vehicle (EV), a hybrid electric vehicle (HEV), or a plug-in hybrid electric vehicle (PHEV), an electric two-wheeled vehicle such as an electric bike (E-bike) or an electric scooter (E-scooter), an electric golf cart, a power storage system, and the like, but the present disclosure is not limited thereto.

As used herein, the term "alkyl group" refers to a branched or unbranched aliphatic hydrocarbon group. In one embodiment, the alkyl group may be substituted or unsubstituted. Examples of the alkyl group includes a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, and the like, but the present disclosure is not limited thereto. In other embodiments, each of the examples of the alkyl group may be optionally substituted. In other embodiments, the alkyl group may have 1 to 6 carbon atoms. For example, a $C_1$ to $C_6$ alkyl group includes a methyl group, an ethyl group, a propyl group, an isopropyl group, a butyl group, an isobutyl group, a sec-butyl group, a pentyl group, a 3-pentyl group, a hexyl group, and the like, but the present disclosure is not limited thereto.

At least one hydrogen of "alkyl" may be substituted with a halogen atom, a $C_1$ to $C_{20}$ alkyl group substituted with a halogen atom (for example, $CCF_3$, $CHCF_2$, $CH_2F$, or $CCl_3$), a $C_1$ to $C_{20}$ alkoxy group, a $C_2$ to $C_{20}$ alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid or a salt thereof, a phosphoric acid or a salt thereof, a $C_1$ to $C_{20}$ alkyl group, a $C_2$ to $C_{20}$ alkenyl group, a $C_2$ to $C_{20}$ alkynyl group, a $C_1$ to $C_{20}$ heteroalkyl group, a $C_6$ to $C_{20}$ aryl group, a $C_7$ to $C_{20}$ arylalkyl group, a $C_6$ to $C_{20}$ heteroaryl group, a C7-C20 heteroarylalkyl group, a $C_6$ to $C_{20}$ heteroaryloxy group, or a $C_6$ to $C_{20}$ heteroaryloxyalkyl group.

As used herein, the term "alkenyl group" refers to a $C_2$ to $C_{20}$ hydrocarbon group and at least one carbon-carbon double bond. Examples of the alkenyl group include an ethenyl group, a 1-prophenyl group, a 2-prophenyl group, a 2-methyl-1-prophenyl group, a 1-butenyl group, a 2-butenyl group, a cycloprophenyl group, cyclopentenyl, a cyclohexenyl, cycloheptenyl group, and the like, but the present disclosure is not limited thereto. In other embodiments, the alkenyl group may be substituted or unsubstituted. In other embodiments, the alkenyl group may have 2 to 40 carbon atoms.

As used herein, the term "alkynyl group" refers to a $C_2$ to $C_{20}$ hydrocarbon group and at least one carbon-carbon triple bond. Examples of the alkynyl group include an ethynyl group, a 1-propynyl group, a 1-butynyl group, a 2-butynyl group, and the like, but the present disclosure is not limited thereto. In other embodiments, the alkynyl group may be substituted or unsubstituted. In other embodiments, the alkynyl group may have 2 to 40 carbon atoms.

In the present specification, a substituted group is derived from an unsubstituted parent group in which at least one hydrogen atom is substituted with another atom or a functional group. Unless otherwise indicated, when a functional group is deemed to be "substituted," it is meant that the functional group is substituted with at least one substituent independently selected from $C_1$ to $C_{20}$ alkyl, $C_2$ to $C_{20}$ alkenyl, $C_2$ to $C_{20}$ alkynyl, $C_1$ to $C_{20}$ alkoxy, halogen, a cyano group, a hydroxyl group, and a nitro group. When a functional group is described as being "optionally substituted," the functional group may be substituted with at least one selected from the above-described substituents.

The term "halogen" includes fluorine, bromine, chlorine, iodine, and the like.

The term "alkoxy" refers to "alkyl-O-", and alkyl is defined above. Examples of the alkoxy group may include a methoxy group, an ethoxy group, a 2-propoxy group, a butoxy group, a t-butoxy group, a pentyloxy group, a hexyloxy group, and the like. At least one hydrogen atom of the alkoxy may be substituted with the same substituent as the above-described alkyl group.

The term "heteroaryl" refers to a monocyclic or bicyclic organic group including at least one heteroatom selected from N, O, P, and S, wherein the remaining ring atoms are all carbon. A heteroaryl group may include, for example, one to five heteroatoms, and in some embodiments, may include a five- to ten-membered ring. S or N may be oxidized to have various oxidation states.

Examples of the heteroaryl may include thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5-yl, isooxazol-3-yl, isooxazol-4-yl, isooxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazin-2-yl, pyrazin-4-yl, pyrazin-5-yl, 2-pyrimidin-2-yl, 4-pyrimidin-2-yl, or 5-pyrimidin-2-yl.

The term "heteroaryl" includes a case in which a heteroaromatic ring is selectively fused to at least one of an aryl group, a cycloaliphatic group, or a heterocyclic group.

The "carbon ring" refers to a saturated or partially unsaturated non-aromatic monocyclic, bicyclic, or tricyclic hydrocarbon group.

Examples of the monocyclic hydrocarbon include cyclopentyl, cyclopentenyl, cyclohexyl, cyclohexenyl, and the like.

Examples of the bicyclic hydrocarbon include bornyl, decahydronaphthyl, bicyclo[2.1.1]hexyl, bicyclo[2.2.1]heptyl, bicyclo[2.2.1]heptenyl, or bicyclo[2.2.2]octyl.

Examples of the tricyclic hydrocarbon include adamantly and the like.

At least one hydrogen atom in the carbon ring may be substituted with a substituent similar to the above-described alkyl group.

Hereinafter, the present disclosure will be described in more detail through the following Examples and Comparative Examples. However, the following Examples and Comparative Examples are merely presented to exemplify the present disclosure, and the scope of the present disclosure is not limited thereto.

Manufacturing of lithium secondary battery)

Example 1

1.5 M $LiPF_6$ and VC were added to a mixed solvent of EC, EMC, and DMC mixed in a volume ratio of 2:4:4, and then 1.0 wt% of a compound represented by Formula 1-2 and 0.2 wt% of a compound represented by Formula 2-2 with respect to the total weight of an electrolyte were added thereto to prepare an electrolyte for a lithium secondary battery.

<Formula 1-2>

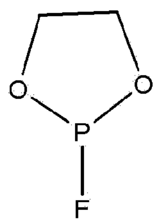

<Formula 2-2>

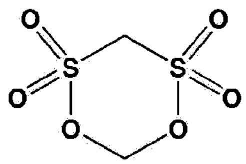

97 wt% of $LiNi_{0.8}Co_{0.1}Al_{0.1}O_2$ as a positive electrode active material, 0.5 wt% of an artificial graphite powder as a conductive material, 0.8 wt% of carbon black (Ketjenblack), 0.2 wt% of modified acrylonitrile rubber, and 1,5 wt% of PVDF were mixed and added to N-methyl-2-pyrrolidone, and then the resultant mixture was stirred for 30 minutes using a mechanical stirrer to prepare slurry of a positive electrode active material. The slurry was applied on a 20 μm-thick aluminum current collector to a thickness of about 60 μm using a doctor blade, dried in a hot air dryer at a temperature of 100 °C for 0.5 hours, dried once again for 4 hours under conditions of vacuum and a temperature of 120 °C, and then roll-pressed to prepare a positive electrode.

Artificial graphite as a negative electrode active material and PVDF as a binder were mixed in a weight ratio of 98:2 and dispersed in N-methyl pyrrolidon to prepare slurry of a negative electrode active material. The slurry was applied on a 10 μm-thick copper current collector to a thickness of about 60 μm using a doctor blade, dried in a hot air dryer at a temperature of 100 °C for 0.5 hours, dried once again for 4 hours under conditions of vacuum and a temperature of 120 °C, and then roll-pressed to prepare a negative electrode.

A cylindrical lithium secondary battery was manufactured using the above-prepared positive and negative electrodes, a polyethylene separator having a thickness of 14 μm, and the electrolyte.

Example 2

A lithium secondary battery was manufactured through the same process as in Example 1, except that the compound represented by Formula 1-2 and the compound represented by Formula 2-2 were added in contents of 1.0 wt% and 0.5 wt%, respectively.

Example 3

A lithium secondary battery was manufactured through the same process as in Example 1, except that the compound represented by Formula 1-2 and the compound represented by Formula 2-2 were added in contents of 1.0 wt% and 1.0 wt%, respectively.

Example 4

A lithium secondary battery was manufactured through the same process as in Example 1, except that the compound represented by Formula 1-2 and the compound represented by Formula 2-2 were added in contents of 0.5 wt% and 1.0 wt%, respectively.

Example 5

A lithium secondary battery was manufactured through the same process as in Example 1, except that the compound represented by Formula 1-2 and the compound represented by Formula 2-2 were added in contents of 0.2 wt% and 1.0 wt%, respectively.

Comparative Example 1

A lithium secondary battery was manufactured through the same process as in Example 1, except that an electrolyte in which both the compound represented by Formula 1-2 and the compound represented by Formula 2-2 were not added was used.

Comparative Examples 2 to 4

Lithium secondary batteries were manufactured through the same process as in Example 1, except that contents of the compound represented by Formula 1-2 were respectively changed to 0.2 wt%, 1.0 wt%, and 1.5 wt% and the compound represented by Formula 2-2 was not added.

Comparative Examples 5 to 7

Lithium secondary batteries were manufactured through the same process as in Example 1, except that contents of the compound represented by Formula 2-2 were respectively changed to 0.2 wt%, 1.0 wt%, and 1.5 wt% and the compound represented by Formula 1-2 was not added.

Evaluation Example 1: Evaluation of initial DCIR at room temperature (25 °C) and rate of increase in DCIR after high-temperature storage

The lithium secondary batteries manufactured in Examples 1 to 5 and Comparative Examples 1 to 7 were tested under a condition of 1C/10 second discharge (SOC 100) at a temperature of 25 °C, and initial DCIRs of the lithium secondary batteries were measured as a $\Delta V/\Delta I$ (change in voltage/change in current) value before the lithium secondary batteries were stored in an oven at a high temperature of 60 °C. Results thereof are shown in Table 1 below. After the initial DCIRs were measured, DCIRs after storage for 60 days at a high temperature (60 °C.) were measured, and a DCIR change rate (%) was calculated according to Equation 1 below.

<Equation 1>

$$\text{DCIR change rate} = \text{DCIR (60d.)}/\text{DCIR (0d.)} \times 100\ \%$$

In Equation 1, DCIR (60d.) represents DCIR after 60 days, and DCIR (0d.) represents DCIR immediately before storage.

Results of measuring the initial DCIR, the DCIR after high-temperature storage, and a resistance change rate are shown in Table 1 below.

[Table 1]

| Classification | Additive (wt%) | | Initial DCIR (mΩ) | After storage at 60 °C | | Generation amount of gas (ml) during storage at 60 °C |
|---|---|---|---|---|---|---|
| | Formula 1-2 | Formula 2-2 | | DCIR (mΩ) | Resistance change rate (%) | |
| Example 1 | 1.0 | 0.2 | 113 | 145.0 | 128 | 0.7 |
| Example 2 | 1.0 | 0.5 | 115 | 142.9 | 124 | 0.6 |

(continued)

| Classification | Additive (wt%) | | Initial DCIR (mΩ) | After storage at 60 °C | | Generation amount of gas (ml) during storage at 60 °C |
|---|---|---|---|---|---|---|
| | Formula 1-2 | Formula 2-2 | | DCIR (mΩ) | Resistance change rate (%) | |
| Example 3 | 1.0 | 1.0 | 120 | 139.2 | 116 | 0.7 |
| Example 4 | 0.5 | 1.0 | 112 | 194.4 | 133 | 0.8 |
| Example 5 | 0.2 | 1.0 | 110 | 151.9 | 138 | 0.9 |
| Comparative Example 1 | - | - | 130 | 176.8 | 136 | 1.4 |
| Comparative Example 2 | 0.2 | - | 131 | 174.2 | 133 | 1.5 |
| Comparative Example 3 | 1.0 | - | 145 | 169.7 | 117 | 0.7 |
| Comparative Example 4 | 1.5 | - | 163 | 179.3 | 110 | 0.6 |
| Comparative Example 5 | - | 0.2 | 144 | 201.6 | 140 | 1.5 |
| Comparative Example 6 | - | 1.0 | 121 | 156.1 | 129 | 1.1 |
| Comparative Example 7 | - | 1.5 | 131 | 157.2 | 120 | 1.0 |

As shown in Table 1, it may be seen that, when the lithium secondary battery of Example 1 is stored at a high temperature for a long time, during high-temperature storage, a DCIR value is low and a rate of increase in DCIR is also reduced as compared with Comparative Example 1 not including the compound of Formula 1-2 or the compound of Formula 2-2 and Comparative Examples 2 to 7 including only one of the compound of Formula 1-2 and the compound of Formula 2-2.

Evaluation Example 2: Evaluation of generation amount of gas during high-temperature storage

The lithium secondary batteries manufactured in Example 1 and Comparative Examples 1 to 9 were charged with 0.1 C under a constant current condition until a voltage reached 4.2 V (vs Li) at a temperature of 25 °C, and then, in a constant voltage mode, while 4.2 V was maintained, the lithium secondary batteries were charged under a cut-off condition of 0.05 C. Then, each of the lithium secondary batteries was disassembled, a positive electrode plate was put into a pouch together with an electrolyte and stored in an oven at a temperature 60 °C. A mass change due to a volume change of the pouch was converted using an Archimedes method. Results thereof are shown together in Table 1 above.

Meanwhile, the electrolyte is a solution in which 1.5 M $LiPF_6$ is dissolved in a mixed solution of EC, DEC, and EMC (mixed in a volume ratio of 2:4:4).

The Archimedes method is a method of measuring a weight of the pouch in a water tank filled with water every specific period (for example, 4 days) and converting a weight change into a volume to measure a generation amount of gas.

Referring to Table 1, it can be seen that, in the lithium secondary battery of Example 1, a resistance change rate is suppressed, and also a generation amount of gas is reduced as compared with the lithium secondary batteries of Comparative Examples 1 to 7.

Evaluation Example 3: Evaluation of life characteristics at room temperature (25 °C)

The lithium secondary batteries manufactured in Examples 1 to 5 and Comparative Examples 1 to 7 were charged with a constant current at a temperature of 25 °C at a current rate of 0.5 C until a voltage reached 4.2V (vs Li), and then, in a constant voltage mode, while 4.2 V was maintained, charging was cut off at a current rate of 0.05 C. Subsequently, the lithium secondary batteries were discharged at a constant current rate of 1.0 C until a voltage reached 2.8 V (vs Li). Such a charging/discharging cycle was repeated 300 times.

The lithium batteries were rested for 10 minutes after every charging/discharging cycle.

Life characteristics at room temperature were evaluated based on a capacity retention ratio at a $300^{th}$ cycle. Results thereof are shown in Table 2 below. The capacity retention rate at the $300^{th}$ cycle is defined by Equation 2 below.

<Equation 2>

capacity retention rate = [discharge capacity at $300^{th}$ cycle/discharge capacity at first cycle] × 100

[Table 2]

| Classifiation | Lifetime at room temperature/capacity retention rate (%) |
|---|---|
| Example 1 | 79 |
| Example 2 | 78 |
| Example 3 | 76 |
| Example 4 | 76 |
| Example 5 | 77 |
| Comparative Example 1 | 71 |
| Comparative Example 2 | 73 |
| Comparative Example 3 | 67 |
| Comparative Example 4 | 58 |
| Comparative Example 5 | 75 |
| Comparative Example 6 | 74 |
| Comparative Example 7 | 68 |

As a result of evaluating charge/discharge characteristics, as shown in Table 2, it can be seen that the lithium secondary batteries of Examples 1 to 5 have improved life characteristics at room temperature as compared with the lithium secondary batteries of Comparative Examples 1 to 7.

Evaluation Example 4: Evaluation of Ni elution

A Ni elution amount of the lithium secondary batteries manufactured in Example 3 and Comparative Examples 1, 3, and 6 was measured through the following method.

The lithium secondary batteries were fully charged to 4.2 V at 0.2 C, stored at a high temperature (60 °C) for 60 days, and then were disassembled to separate positive electrode plates. A Ni content was measured through an inductively coupled plasma=mass spectrometry (ICP-MS) analysis. Results thereof are shown in FIG. 2.

Referring to FIG. 2, it can be seen that, in the lithium secondary battery manufactured in Example 3, a Ni elution amount from an electrode plate is very low. However, it was confirmed that, as compared with the lithium secondary battery of Example 1, a considerably large amount of nickel (Ni) was eluted from the lithium secondary batteries manufactured in Comparative Examples 1, 3, and 6. Therefore, in the case of the lithium secondary batteries according to Examples, it may be seen that an amount of gas generated during high-temperature storage may be considerably reduced, and an amount of Ni ion elution due to a reaction with an electrolyte may be reduced.

While one or more embodiments have been described with reference to the drawings and Examples, the description merely illustrates, and it will be understood by those of ordinary skill in the art that various modifications and other equivalent embodiments are possible therefrom. Therefore, the protection scope of the present disclosure should be defined by the appended claims.

[Descriptions of Reference Numerals

| | | | |
|---|---|---|---|
| 1: | lithium secondary battery | 2: | negative electrode |
| 3: | positive electrode | 4: | negative electrode |
| 5: | battery case | 6: | cap assembly |

## Claims

1. An electrolyte for a lithium secondary battery, comprising:

   a lithium salt;
   an organic solvent; and
   an additive,
   wherein the additive comprises a first compound represented by Formula 1 below and a second compound represented by Formula 2 below, and a mixing weight ratio of the first compound to the second compound is in a range of 1:9 to 9:1:

   <Formula 1>

   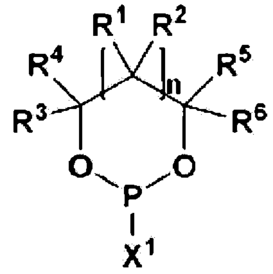

   wherein, in Formula 1, $X^1$ is a fluoro group, a chloro group, a bromo group, or an iodo group, $R^1$ to $R^6$ are each independently hydrogen, a cyano group, a substituted or unsubstituted $C_1$ to $C_{20}$ alkyl group, a substituted or unsubstituted $C_1$ to $C_{20}$ alkoxy group, a substituted or unsubstituted $C_2$ to $C_{20}$ alkenyl group, a substituted or unsubstituted $C_2$ to $C_{20}$ alkynyl group, a substituted or unsubstituted $C_3$ to $C_{20}$ cycloalkyl group, a substituted or unsubstituted $C_6$ to $C_{20}$ aryl group, or a substituted or unsubstituted $C_2$ to $C_{20}$ heteroaryl group, and n is an integer of 0 or 1, and

   <Formula 2>

   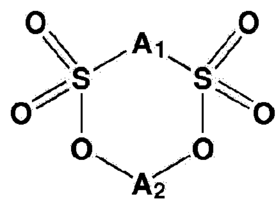

   wherein, in Formula 2, $A_1$ and $A_2$ are each independently a substituted or unsubstituted $C_1$ to $C_5$ alkylene group, a carbonyl group, a sulfinyl group, or a divalent $C_2$ to $C_6$ group in which a plurality of substituted or unsubstituted alkylene units are bonded through ether bonds.

2. The electrolyte of claim 1, wherein the mixing weight ratio of the compound represented by Formula 1 to the second compound represented by Formula 2 is in a range of 1:5 to 5:1.

3. The electrolyte of claim 1, wherein a content of the first compound is in a range of 0.05 wt% to 10 wt% with respect

to a total weight of the electrolyte.

**4.** The electrolyte of claim 1, wherein a content of the second compound is in a range of 0.05 wt% to 10 wt% with respect to a total weight of the electrolyte.

**5.** The electrolyte of claim 1, wherein the first compound is represented by Formula 1-1:

<Formula 1-1>

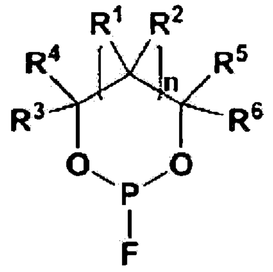

wherein, in Formula 1-1, $R^1$ to $R^6$ are each independently hydrogen, a cyano group, a substituted or unsubstituted $C_1$ to $C_{20}$ alkyl group, a substituted or unsubstituted $C_1$ to $C_{20}$ alkoxy group, a substituted or unsubstituted $C_2$ to $C_{20}$ alkenyl group, a substituted or unsubstituted $C_2$ to $C_{20}$ alkynyl group, a substituted or unsubstituted $C_3$ to $C_{20}$ cycloalkyl group, a substituted or unsubstituted $C_6$ to $C_{20}$ aryl group, or a substituted or unsubstituted $C_2$ to $C_{20}$ heteroaryl group, and n is an integer of 0 or 1.

**6.** The electrolyte of claim 1, wherein the first compound is represented by Formula 1-1A or Formula 1-1B:

<Formula 1-1A> <Formula 1-1B>

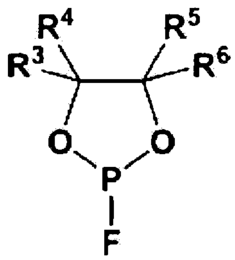

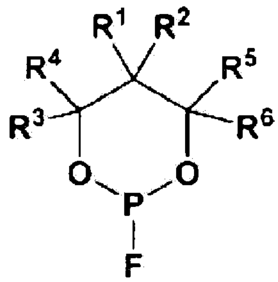

wherein, in Formulas 1-1A and 1-1B, $R^1$ to $R^6$ are each independently hydrogen, a substituted or unsubstituted $C_1$ to $C_{10}$ alkyl group, a substituted or unsubstituted $C_1$ to $C_{10}$ alkoxy group, a substituted or unsubstituted $C_2$ to $C_{10}$ alkenyl group, or a substituted or unsubstituted $C_2$ to $C_{10}$ alkynyl group.

**7.** The electrolyte of claim 1, wherein the first compound is at least one selected from compounds represented by Formulas 1-2 to 1-9:

<Formula 1-2> <Formula 1-3> <Formula 1-4> <Formula 1-5>

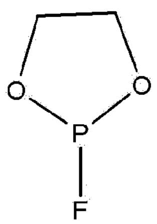

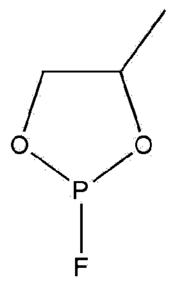

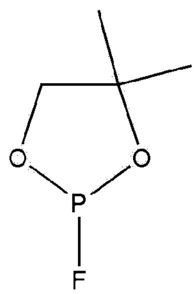

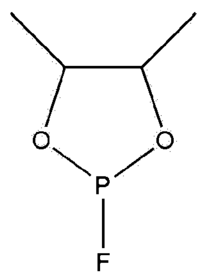

<Formula 1-6> <Formula 1-7> <Formula 1-8> <Formula 1-9>

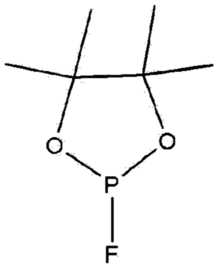 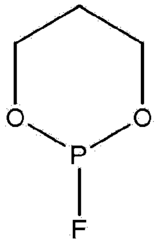 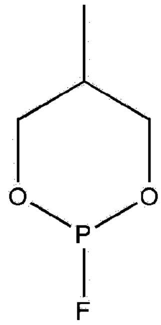 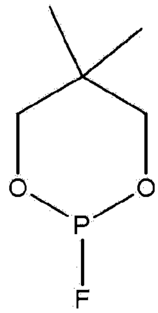.

**8.** The electrolyte of claim 1, wherein the second compound is represented by Formula 2-1:

<Formula 2-1>

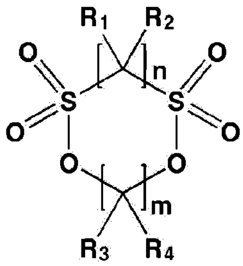

wherein, in Formula 2-1, $R^1$ to $R^4$ are each independently hydrogen, a cyano group, a substituted or unsubstituted $C_1$ to $C_{20}$ alkyl group, a substituted or unsubstituted $C_1$ to $C_{20}$ alkoxy group, a substituted or unsubstituted $C_2$ to $C_{20}$ alkenyl group, a substituted or unsubstituted $C_2$ to $C_{20}$ alkynyl group, a substituted or unsubstituted $C_3$ to $C_{20}$ cycloalkyl group, a substituted or unsubstituted $C_6$ to $C_{20}$ aryl group, or a substituted or unsubstituted $C_2$ to $C_{20}$ heteroaryl group, n is an integer of 0 or 1, and m is an integer from 1 to 5.

**9.** The electrolyte of claim 1, wherein the second compound is at least one selected from compounds represented by Formulas 2-2 to 2-19 below:

<Formula 2-2> <Formula 2-3> <Formula 2-4> <Formula 2-5>

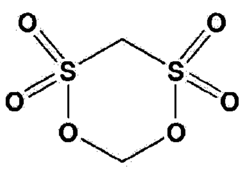 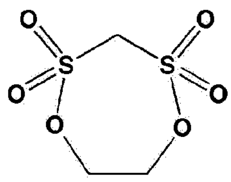 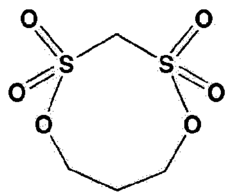 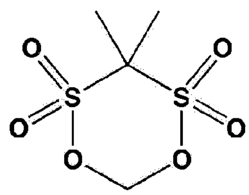

<Formula 2-6> <Formula 2-7> <Formula 2-8> <Formula 2-9>

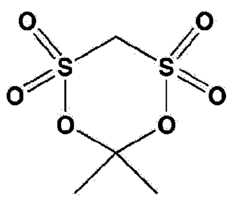 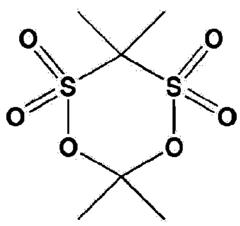 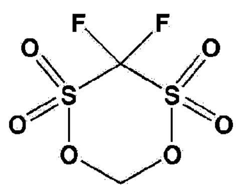 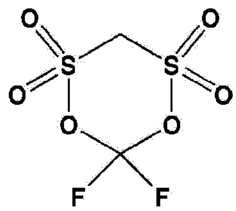

<Formula 2-10> <Formula 2-11> <Formula 2-12> <Formula 2-13>

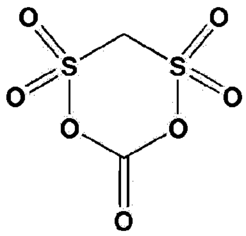
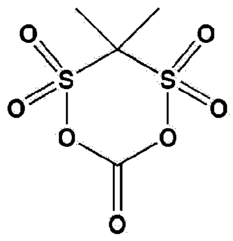
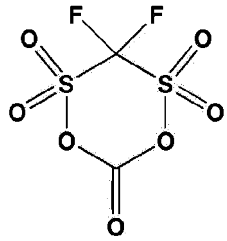
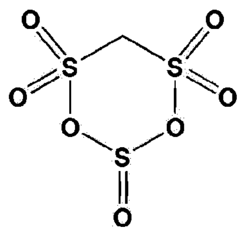

<Formula 2-14> <Formula 2-15> <Formula 2-16>

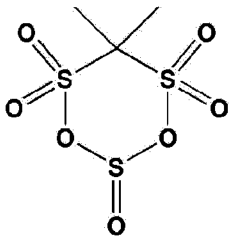
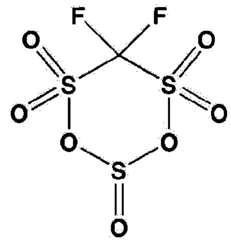
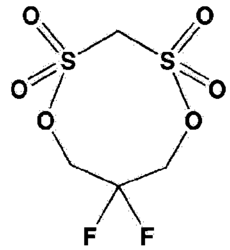

<Formula 2-17> <Formula 2-18> <Formula 2-19>

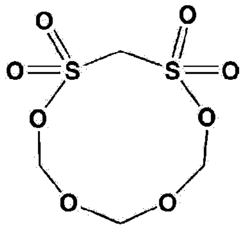
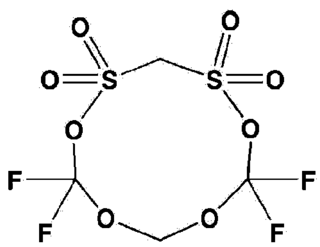
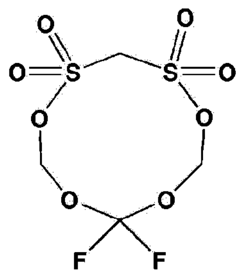

**10.** The electrolyte of claim 1, wherein the lithium salt comprises at least one selected from $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein $2 \leq x \leq 20$ and $2 \leq y \leq 20$), LiCl, LiI, lithium bis(fluorosulfonyl)imide (LiFSI), lithium bis(oxalato)borate (LiBOB), $LiPO_2F_2$, and compounds represented by Formulas 3 to 6:

<Formula 3> <Formula 4>

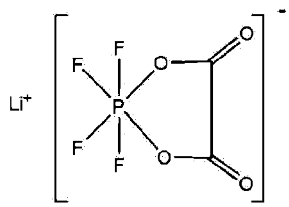
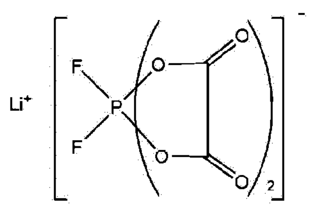

<Formula 5> <Formula 6>

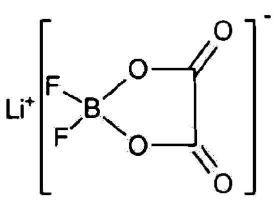 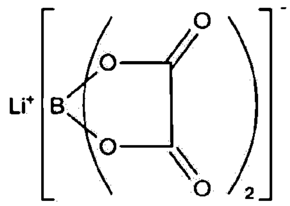.

**11.** The electrolyte of claim 1, wherein a concentration of the lithium salt is in a range of 0.01 M to 5.0 M.

**12.** A lithium secondary battery comprising:
a positive electrode comprising a positive electrode active material;

a negative electrode comprising a negative electrode active material; and
the electrolyte of any one of claims 1 to 11 disposed between the positive electrode and the negative electrode.

**13.** The lithium secondary battery of claim 12, wherein the positive electrode comprises a compound represented by Formula 7 below:

<Formula 7> $Li_aNi_xCo_yM_zO_{2-b}A_b$,

wherein, in Formula 7, $1.0\leq a\leq 1.2$, $0\leq b\leq 0.2$, $0.6\leq x<1$, $0<y\leq 0.3$, $0<z\leq 0.3$, $x+y+z=1$, M is at least one selected from manganese (Mn), vanadium (V), magnesium (Mg), gallium (Ga), silicon (Si), tungsten (W), molybdenum (Mo), iron (Fe), chromium (Cr), copper (Cu) ), zinc (Zn), titanium (Ti), aluminum (Al), and boron (B), and A is F, S, Cl, Br, or a combination thereof.

FIG. 1

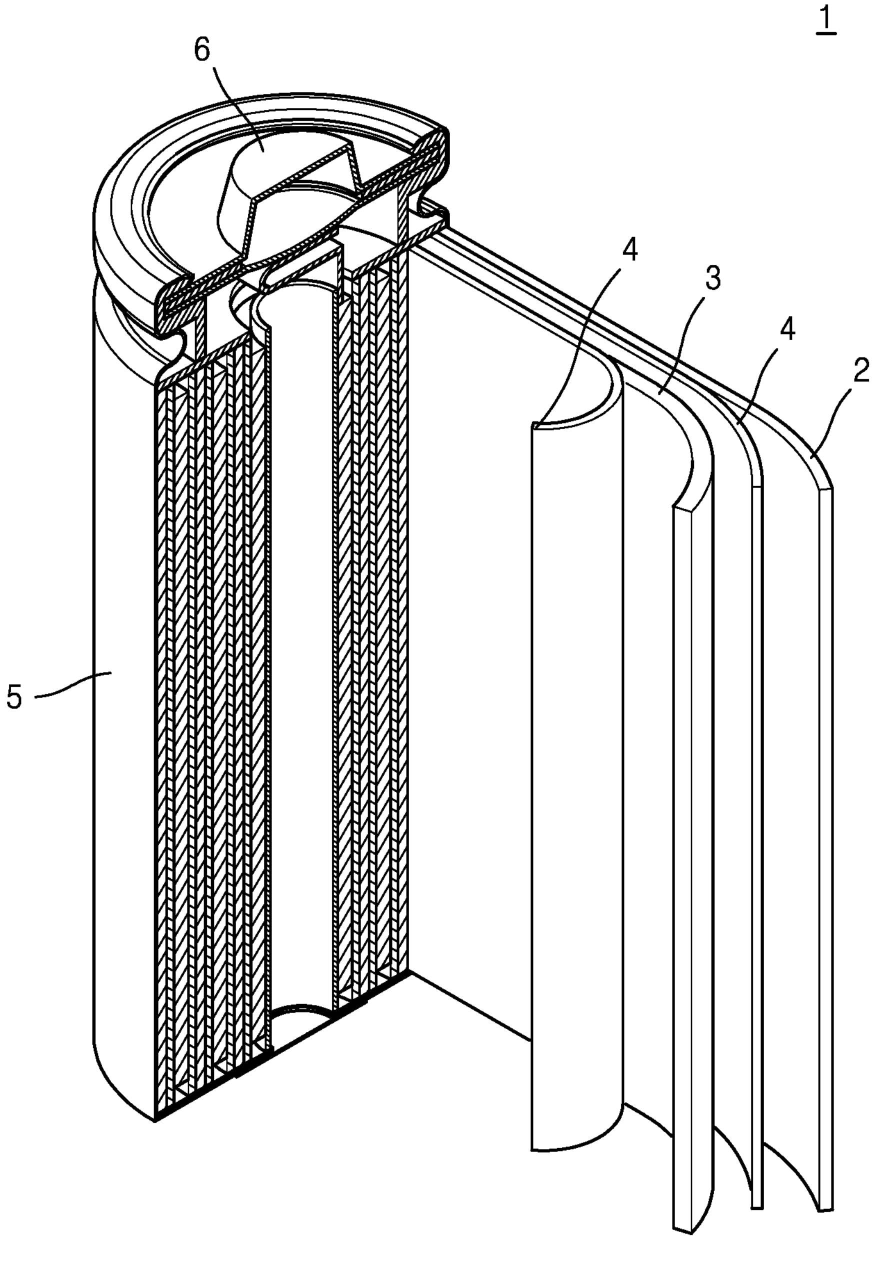

FIG. 2

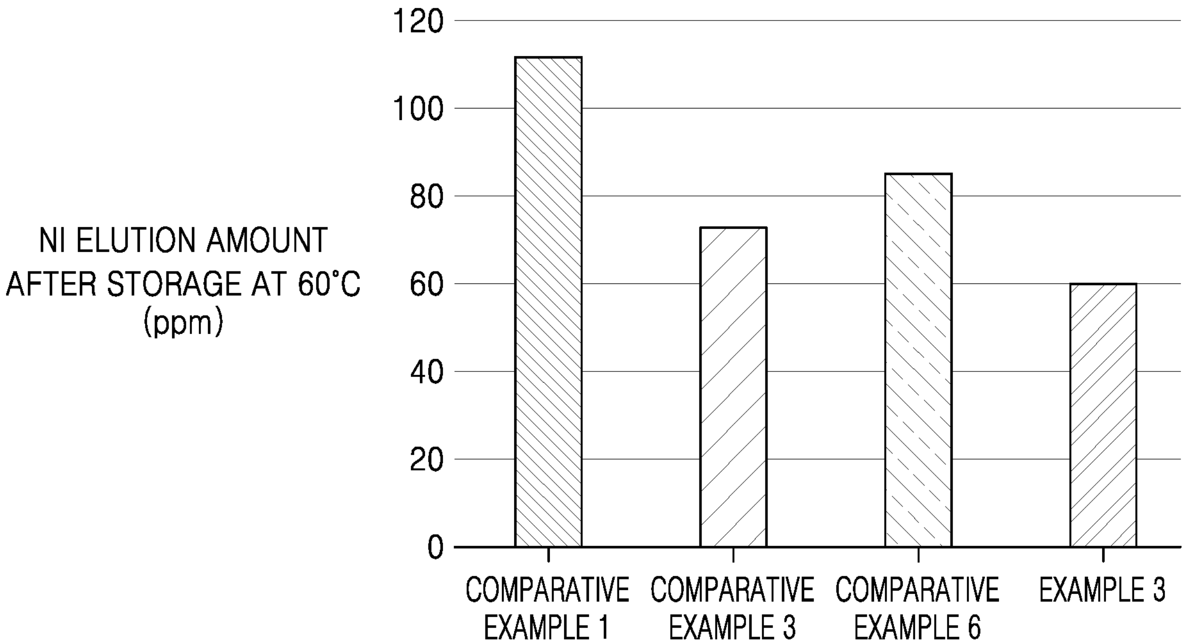
NI ELUTION AMOUNT
AFTER STORAGE AT 60°C
(ppm)
120
100
80
60
40
20
0
COMPARATIVE EXAMPLE 1
COMPARATIVE EXAMPLE 3
COMPARATIVE EXAMPLE 6
EXAMPLE 3

## INTERNATIONAL SEARCH REPORT

International application No.
**PCT/KR2021/020170**

**A. CLASSIFICATION OF SUBJECT MATTER**

**H01M 10/0567**(2010.01)i; **H01M 4/525**(2010.01)i; **H01M 10/0525**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/40(2006.01); H01M 4/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 1,5,2,4-디옥사디티안(1,5,2,4-dioxadithiane), 1,3,2-디옥사포스포리난(1,3,2-dioxaphosphorinane), 리튬염(lithium salt), 전해질(electrolyte)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0002314 A (SOULBRAIN CO., LTD.) 07 January 2016 (2016-01-07)<br>See claims 1-9, 14 and 15; and paragraphs [0057], [0130]-[0134] and [0143]. | 1-13 |
| Y | KR 10-2017-0018739 A (SAMSUNG SDI CO., LTD.) 20 February 2017 (2017-02-20)<br>See claims 1-6; and paragraph [0054]. | 1-13 |
| A | US 2020-0144669 A1 (SHENZHEN CAPCHEM TECHNOLOGY CO., LTD.) 07 May 2020 (2020-05-07)<br>See claims 1-10. | 1-13 |
| A | JP 2005-222846 A (NEC CORP.) 18 August 2005 (2005-08-18)<br>See claims 1-16. | 1-13 |
| A | KR 10-2016-0142338 A (3M INNOVATIVE PROPERTIES COMPANY) 12 December 2016 (2016-12-12)<br>See entire document. | 1-13 |

☐ Further documents are listed in the continuation of Box C.　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 April 2022** | **11 April 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/020170**

| Patent document cited in search report | Publication date (day/month/year) | Patent family member(s) | Publication date (day/month/year) |
|---|---|---|---|
| KR 10-2016-0002314 A | 07 January 2016 | None | |
| KR 10-2017-0018739 A | 20 February 2017 | None | |
| US 2020-0144669 A1 | 07 May 2020 | CN 109326824 A | 12 February 2019 |
| | | CN 109326824 B | 21 April 2020 |
| | | EP 3664212 A1 | 10 June 2020 |
| | | EP 3664212 B1 | 12 May 2021 |
| | | WO 2019-024412 A1 | 07 February 2019 |
| JP 2005-222846 A | 18 August 2005 | JP 4577482 B2 | 10 November 2010 |
| KR 10-2016-0142338 A | 12 December 2016 | CN 106170886 A | 30 November 2016 |
| | | EP 3127181 A1 | 08 February 2017 |
| | | JP 2017-510045 A | 06 April 2017 |
| | | US 2017-0025706 A1 | 26 January 2017 |
| | | WO 2015-153716 A1 | 08 October 2015 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020180031585
- KR 1020180056395
- KR 1020180031586